(19) Europäisches Patentamt
European Patent Office
Office européen des brevets

(11) **EP 1 387 785 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(21) Anmeldenummer: **02735320.0**

(22) Anmeldetag: **30.04.2002**

(51) Int Cl.:
***B60T 7/12*** *(2006.01)*     ***B60W 10/18*** *(2006.01)*

(86) Internationale Anmeldenummer:
**PCT/EP2002/004754**

(87) Internationale Veröffentlichungsnummer:
**WO 2002/090158 (14.11.2002 Gazette 2002/46)**

(54) **VERFAHREN ZUM UNTERSTÜTZEN DES ANFAHRENS EINES FAHRZEUGS AN EINEM HANG**

METHOD FOR ASSISTING A VEHICLE TO START ON A SLOPE

PROCEDE D'ASSISTANCE AU DEMARRAGE EN PENTE D'UN VEHICULE

(84) Benannte Vertragsstaaten:
**DE FR IT**

(30) Priorität: **08.05.2001 DE 10122328
28.06.2001 DE 10131291**

(43) Veröffentlichungstag der Anmeldung:
**11.02.2004 Patentblatt 2004/07**

(73) Patentinhaber: **Continental Teves AG & Co. oHG
60488 Frankfurt am Main (DE)**

(72) Erfinder:
• **DIEBOLD, Jürgen
65760 Eschborn (DE)**
• **HUTH, Oliver
61476 Kronberg (DE)**

(74) Vertreter: **Graf, Ulrich
Continental Teves AG & Co.oHG
Guerickestrasse 7
60488 Frankfurt am Main (DE)**

(56) Entgegenhaltungen:
**EP-A- 0 939 212     WO-A-99/20921
DE-A- 19 630 870     DE-A- 19 849 799**

• **PATENT ABSTRACTS OF JAPAN vol. 1995, no. 06, 31. Juli 1995 (1995-07-31) & JP 07 069102 A (TOYOTA MOTOR CORP), 14. März 1995 (1995-03-14)**

**Beschreibung**

Die Erfindung betrifft ein Verfahren zum Unterstützen des Anfahrens eines Fahrzeugs an einem Hang nach dem Oberbegriff des Anspruchs 1 und eine Vorrichtung nach dem Oberbegriff des Anspruchs 17.

Unter dem Begriff des Anfahrens an einem Hang wird das Anfahren bergaufwärts und bergabwärts sowie das Anfahren, in der Ebene verstanden.

Eine Anfahrhilfe soll den Fahrer beim Anfahren am Berg unterstützen. Anfahrhilfen am Berg sollen das komplizierte Handhaben von Bremse, Feststellbremse, Kupplung und Motor vereinfachen. Gleichzeitig muß sichergestellt werden, daß unter keinen Umständen das Fahrzeug rückwärts rollt, um beispielsweise Kollision mit bergab stehenden Fahrzeugen zu vermeiden. Dazu muß ein solches Assistenzsystem neben dem Hangabtriebsmoment und dem Bremsmoment das über die Kupplung auf die Antriebsachse übertragene Antriebsmoment ermitteln.

In der WO99/20921 (P 9154) wird ein Verfahren angegeben, das nach Maßgabe des ermittelten Antriebsmoments und des ermittelten Hangabtriebsmoments das Bremsmoment derart beeinflußt, daß beim bergauf Anfahren die Summe aus Bremsmoment und ermittelte Antriebsmoments immer größer als das Hangabtriebsmoment ist. Dabei wird die Schätzung des Antriebsmoments in einem Beobachter direkt, d.h. absolut ausgewertet.

Der Nachteil dieses Verfahrens ist, daß eventuell in der Schätzung des Antriebsmoments vorhandene Fehler in die Bilanzierung eingehen und je nach Fehler ein zum frühes oder zu spätes Lösen der Bremse während des Anfahrvorgangs erfolgt.

Das Fahrzeug wird also bei Fehlern in der Ermittlung des Antriebsmoments entgegen der gewünschten Fahrtrichtung wegrollen (löst zu früh) oder das Fahrzeug wird zu lange festgehalten und der Fahrer beim Anfahren behindert.

Mögliche Fehler in der Ermittlung des Antriebsmoments können dabei auf folgenden Ursachen beruhen:

Im Fahrzeug sind mechanisch und/oder elektrisch bedingte Lasten vorhanden, die aber bei der modellbasierten Ermittlung des Antriebsmoments nicht mitberücksichtigt sind. Diese können z.B. starke elektrische Verbraucher wie eine Sitzheizung oder sonstiges, nachträglich eingebautes Zubehör sein.

- Der im Fahrzeug verbaute Verbrennungsmotor weist im Vergleich zu anderen, baugleichen Motoren, ein deutlich anderes Reibmoment auf (Serienstreuung, Alterung, etc.).
- Es werden Zusatzmomente (wie z.B. ISAD- Moment, Lastmoment des Klimakompressors, etc.) bereits von vorhandenen Steuergeräten ermittelt und zur Verfügung gestellt, diese können jedoch fehlerbehaftet sein. Zum Beispiel wird das Lastmoment des Klimakompressors meist nur als statischer, maximaler Wert im Verlustmoment des vom Motorsteuergerait gelieferten Verlustmoments berücksichtigt.

Weiterhin ist aus der DE 196 30 870 A die Ermittlung eines Referenzwerts bekannt. Der Referenzwerts entspricht dabei einer minimalen Kraft die erforderlich ist , um den Stillstand des Fahrtzeugs zu gewährleisten. Eine Möglichkeit zur Ermittlung des Referenzwertes besteht darin, den Bremsdruck zu berücksichtigen, welcher in dem Zeitpunkt vorhanden ist, in dem die Fahrzeuggeschwindigkeit gerade Null ist.

Der Erfindung liegt die Aufgabe zugrunde, ein genaueres Verfahren zur Unterstützen des Anfahrens eines Fahrzeugs anzugeben, und eine entsprechende Vorrichtung zu schaffen.

Erfindungsgemäß wird diese Aufgabe durch die Merkmale des Anspruchs 1 gelöst.

Der Referenzwerte bezieht sich dabei im Gegensatz zur DE 196 30 870 A auf die Auswertung der Schätzung des Antriebsmoments selbst und stellt daher einen anderen Reterenzwert dar.

Durch die Merkmale des Anspruchs 1 erfolgt, vorteilhaft:

- eine relative Auswertung vom geschätzten Antriebsmoment,
- eine Ermittlung eines Referenzwertes zur relativen Bewertung.

Die relative Auswertung der Schätzung des Antriebsmoments ist für eine Anfahrhilfe im Vergleich zur absoluten Auswertung vorteilhaft, da in jedem Fahrzeug eine andere absolute Verstemmung des Antriebsmoments vorliegt. Dabei können die in den unterschiedlichen Fahrzeugen vorhandenen unterschiedlichen Reibmomente, das unterschiedliche Zubehör und unterschiedliche Lasten, die nicht modelliert sind, durch die relative Bewertung berücksichtigt werden, da nur die nach Maßgabe von bestimmten Bedingungen ermittelte Differenz zwischen dem Fahrzeugantriebsmoment und dem Fahrzeugantriebsmoment-Referenzwert in die Bilanzierung eingehen. Der ermittelte Fahrzeugantriebsmoment-Referenzwert ist ein von Bedingungen abhängenden Offsetwert des Fahrzeugantriebsmoments, in den die fahrzeugbedingten Lastmomente eingehen. Es entsteht unabhängig von unterschiedlichen Lastmomenten ein für den Fahrer immer gleiches Verhalten des Fahrzeugs. Der Fahrer wird also im Anfahrvorgang dadurch reproduzierbar gleich unterstützt, unabhängig davon, ob der Motor kalt: ist und mehr Reibmoment verursacht als das Motorsteuergerät schätzt oder andere zusätzliche Lastmomente vorhanden sind, die nicht, in die Schätzung vom Fahrzeugantriebsmoment (M_DRIVE) eingehen.

Verteilhaft wird der Fahrzeugantriebsmoment-Referenzwert innerhalb eines Toleranzbandes mit dem Fahrzeugantriebsmoment solange mitgeführt, bis das Bremspedal und/oder die Feststellbremse gelöst wird. Ein Toleranzband innerhalb dem der Referenzwert dem Antriebsmoment folgt, ermöglicht die Fehler in der Antriebsmomentenschatzung ausreichend zu eliminieren, dabei kann der Fahrer aber zum anderen gegen, eine ungenügend betätigte Feststellbremse anfahren. Die Toleranzband-Grenzwerte begrenzen das Mitführen des Referenzwerts auf physikalisch sinnvolle Werte.

Die relative Auswertung der Schätzung des Antriebsmoments führt nicht zum zu frühen oder zu späten Lösen der Bremse durch die Anfahrhilfe im Anfahrvorgang.

Gegenstand der Erfindung ist ferner, daß eine gattungsgemäße Vorrichtung zum Unterstützen des Anfahrens eines Fahrzeugs an einem Hang, bei dem unter Berücksichtigung eines Hangabtriebsmoments ein Fahrzeugbremsmoment entsprechend einem geschätzten Fahrzeugantriebsmoment verändert wird, ausgestattet ist mit einer Ermittlungseinheit zum Ermitteln eines Fahrzeugantriebsntoment-Referenzwertes, einer Vergleichseinheit zum Vergleichen des Referenzwertes mit dem geschätzten Fahrzeugantriebsmoment, und einer Vorrichtung zum Beeinflussen des Bremsmomentes nach Maßgabe des Vergleichsergebnisses, wobei der Fahrzeugantriebsmoment-Referenzwert innerhalb eines Toleranzbandes mit dem Fahrzeugantriebsmoment solange mitgeführt wird, bis das Bremspedal und/oder die Feststellbremse gelöst wird.

Vorteilhaft ist, daß der Fahrzeugantriebsmoment-Referenzwert nach Maßgabe des Fahrzeugantriebsmoments ermittelt wird.

Des Weiteren ist es vorteilhaft, daß der Referenzwert des Fahrzeugantriebsmoments in Abhängigkeit vom weiteren Größen bzw. Kennwerten bzw. Meßgrößen oder deren Ableitungen, wie das Lösen des Bremspedals und/oder das Betätigen des Fahrpedals und/oder den momentanen Fahrzeugzustand wiedergebende Größen (Stillstand, Anfahren, Starten des Motors, Motordrehzahl etc.) ausgewertet wird. Hierdurch ist es möglich, die in speziellen Fahrsituationen und/oder bei speziellen Fahrzeugzuständen auftretenden Ungenauigkeiten des geschätzten Fahrzeugantriebsmoments oder des Referenzwertes zu korrigieren. Ein Beispiel hierfür ist eine Begrenzung der Motordrehzahl, die bei der modellbasierten Schätzung des Antriebsmomentes gemäß der WO99/20921 (P 9154), auf die voll inhaltlich verwiesen wird und deren Beschreibung der Ermittlung des Antriebsmoments Bestandteil dieser Anmeldung ist, zu einem geschätzten Antriebsmoment in Leerlaufmodell führen kann, das jedoch an den angetriebenen Rädern nicht verfügbar ist.

Nach einem weiteren Ausführungsbeispiel ist es vorteilhaft, daß der Fahrzeugantriebsmoment-Referenzwert innerhalb des Toleranzbandes mit dem Fahrzeugantriebsmoment auch hin zu dem unteren Toleranzband-Grenswert mitgeführt wird, wenn mindestens das Bremspedal (und ggf. die Feststellbremse) gelöst wurde. Dadurch wird es beim Abbruch eines Anfahrvorganges, wenn bei betätigter Bremse bereits Antriebsmoment aufgebaut, wurde, der Referenzwert nicht auf dem zuvor erreichten hohen Wert festgehalten, von dem aus dann eine erneute Anfahrerkennung startet, sondern der Referenzwert wird wieder mit dem Antriebsmoment nach unten auf den kleineren Wert mitgeführt. Eine Komforteinbuße, wie ein zu langes halten des Fahrzeugs bei vorliegendem Anfahrwunsch, wird hierdurch vermieden.

Ist die Betätigung der Feststellbremse in das Verfahren und die Vorrichtung zum Unterstützen des Anfahrens integriert, können die auf ein Lösen der Betriebsbremse gerichteten Verfahrensschritte und die Vorrichtung, auch bei einem Lösen der Feststellbremse angewendet werden.

Ferner ist es von Vorteil, daß der Fahrzeugantriebsmoment-Referenzwert innerhalb des Toleranzbandes mit dem Fahrzeugantriebsmoment in Abhängigkeit von einer Fahrpedal-Größe hin zu dem unteren Toleranzband-Grenzwert mitgeführt wird, wenn mindestens das Bremspedal gelöst wurde.

Es ist besonders zweckmäßig, daß der Fahrzeugantriebsmoment-Referenzwert erst nach einer vorgegebenen Zeitdauer hin zu dem unteren Toleranzband-Grenzwert mitgeführt wird, wobei die Zeitdauer in Abhängigkeit von der Fahrpedal-Größe und/oder in Abhängigkeit von einem Grenzwert der Motordrehzahl gestartet wird.

Darüber hinaus ist es vorteilhaft, daß der Fahrzeugantriebsmoment-Referenzwert innerhalb des Toleranzbandes mit dem Fahrzeugantriebsmoment auch mit begrenzten Gradienten hin zu dem oberen oder unteren Toleranzband-Grenzwert mitgeführt wird, wenn das Bremspedal gelöst wurde. Durch diesen Verfahrensschritt wird berücksichtigt, daß zusätzliche Lasten, die in der modellbasierte Ermittlung des Antriebsmoments nicht berücksichtigt werden können, eine ungewollte Deaktivierung der Vorrichtung herbeiführen. Der Referenzwert kann daher innerhalb seines Toleranzbandes mitgeführt werden, wobei die Geschwindigkeit dieser Anpassung eine Limitierung erfährt.

Die begrenzten Gradienten werden vorteilhaft nach Maßgabe der Änderung des Fahrzeugantriebsmoments ermittelt.

Der Fahrzeugantriebsmoment-Referenzwert wird dann wieder mit dem Fahrzeugantriebsmoment mitgeführt, wenn das Fahrzeugantriebsmoment sich kontinuierlich in Richtung der unteren Grenze des Toleranzbandes bewegt, nachdem es den Wert des Fahrzeugantriebsmoment-Referenzwerts unterschritten hat, der selbst nur mit einem limitierten Gradienten dieser Änderung folgen kann.

Außerdem ist es vorteilhaft, daß der Fahrzeugantriebsmoment-Referenzwert dem Fahrzeugantriebsmoment mit begrenzten Gradienten hin zu dem oberen oder unteren Toleranzband-Grenzwert nur folgt, wenn die Fahrpedal-Größe einen momentanen Fahrzeugzustand wiedergibt, bei dem das Fahrpedal gelöst ist. Hierdurch wird vermieden, daß ein Anfahren verzögert wird.

Darüber hinaus muß vorteilhaft die Bedingung erfüllt sein, daß der Grenzwert der Motordrehzahl unterschritten wird.

Da beim Starten des Fahrzeugs - wenn die Schätzung des Antriebsmoments sehr fehlerbehaftet ist - die Anfahr-Unterstützung beim Vorliegen von Eintrittsbedingungen selbsttätig ausgelöst werden kann, wird vorteilhaft beim Starten mindestens der obere Toleranzband-Grenzwert für dem Fahrzeugantriebsmoment-Referenzwert während einer Zeitdauer heraufgesetzt, die anhand von auf Erfahrungswerten basierenden Tabellen oder durch Konstanten oder durch Formeln, die den Starvorgang im Zusammenhang mit Eigenschaften/Kennwerten des Fahrzeugs berücksichtigen, beschrieben werden kann. Der Fahrzeugantriebsmoment-Referenzwert wird dadurch während der Startphase mit dem fehlerbehafteten Fahrzeugantriebsmoment mitgeführt. Die Ermittlung einer fehlerhaften Anfahrbedingung kann durch diese Maßnahme ausgeschlossen werden.

Da die Schätzung des Fahrzeugantriebsmoments auch fehlerhaft werden kann, wenn der Fahrer das Fahrpedal mit großen Änderungen in kurzer zeitlicher Folge hintereinander vorgibt, ist es zweckmäßig, daß in Abhängigkeit von der Betätigungsgeschwindigkeit des Fahrpedals und der Anzahl der Betätigungen des Fahrpedals während einer vorgegebenen Zeitdauer ein Zusatzmoment M_DOWM_CORR ermittelt wird, das bei der Anfahr-Unterstützung berücksichtigt wird.

Vorteilhaft ist, daß das Zusatz- oder Korrekturmoment in der Bilanzierung so berücksichtigt wird, daß das Zusatzmoment M_DOWN_CORR und das Hangabtriebsmoment M_HANG summiert werden.

Ausführungsbeispiele der Erfindung sind in den Zeichnungen dargestellt und werden im Folgenden näher beschrieben.

Es zeigen

Figur 1     ein Diagramm über den zeitlichen Verlauf des geschätzten Fahrzeugantriebsmoments und des Fahrzeugantriebsmoment-Referenzwertes

Figur 1a     ein Schema über den Ablauf des Verfahrens nach Figur 1

Figur 2     ein Diagramm nach Figur 1 in einem Toleranzband bei einem Verfahrensablauf im Aktivierungszweig der Figur 1a

Figur 2a     ein Diagramm nach Figur 1 bei einem Verfahrensablauf im Anfahrzweig der Figur 1a

Figur 3     ein Diagramm nach Figur 1, in dem ein Verfahrensablauf mit unterbrochen Anfahren dargestellt ist

Figur 4     ein Diagramm nach Figur 1, in dem ein Verfahrensablauf mit dynamischer Fahrpedalbetätigung dargestellt ist

Figur 4a     ein Schema über den Ablauf des Verfahrens nach Figur 4

Figur 5     ein Diagramm über den Startvorgang, mit den Größen Motormoment, Motordrehzahl, Antriebsmomente

Figur 6     ein Diagramm über den zeitlichen Verlauf eines Zusatzmoments in Abhängigkeit von der Fahrpedalbetätigung

Figur 7     ein Diagramm nach Figur 1, in dem der Referenzwert mit begrenztem Gradienten mitgeführt wird

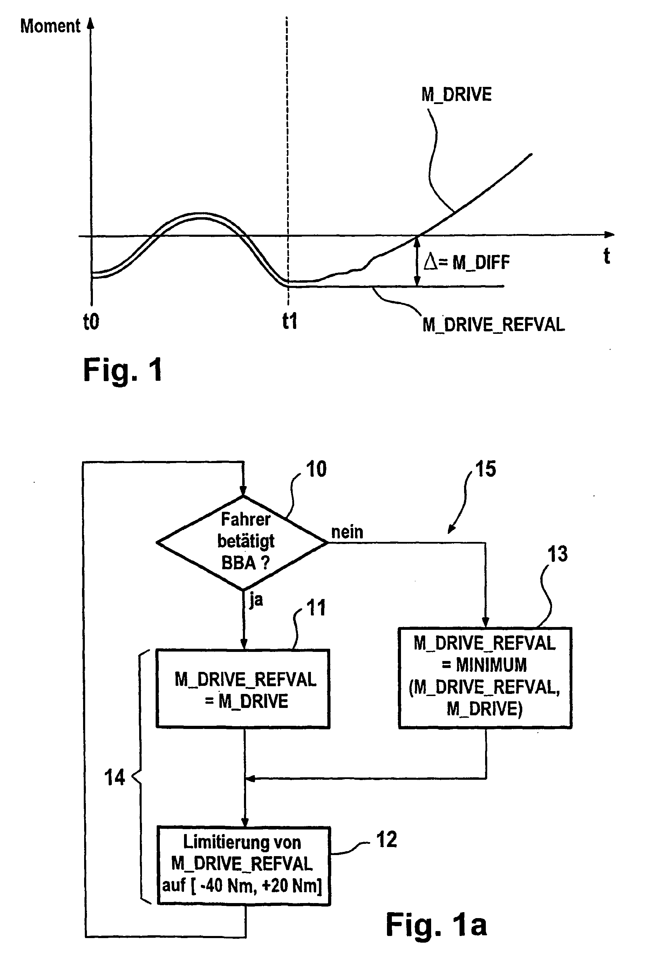

Figur 1 zeigt ein Diagramm über den zeitlichen Verlauf des Antriebsmoments M_DRIVE und des Antriebsmoment-Referenzwerts M_DRIVE_REFVAL. Dabei folgt der Referenzwert M_DRIVE_REFVAL dem Antriebsmoment M_DRIVE bis zum Zeitpunkt t1, an dem die Betriebsbremse und/oder die Feststellbremse gelöst wird.

Während der Zeitdauer t0 bis t1, in der der Fahrer keinen Anfahrwunsch erkennen läßt, da er die Betriebsbremse betätigt oder die Feststellbremse betätigt ist, wird der Referenzwert mitgeführt. In Situationen, in denen der Fahrer potentiell Antriebsmoment aufbauen kann, wird der Referenzwert M_DRIVE_REFVAL geeignet festgehalten, damit der Anfahrwunsch des Fahrers, bei dem M_DRIVE gegenüber dem Referenzwert M_DRIVE_REFVAL ansteigt, erkannt wird. Antriebsmoment kann nach einem Ausführungsbeispiel von dem Fahrer aufgebaut werden, wenn die Betriebsbremse und die Feststellbremse gelöst ist.

Es wird dabei nicht die absolute Größe des Antriebsmoments M_DRIVE zur Bilanzierung gegenüber dem Hangabtriebsmoment im Anfahrvorgang herangezogen, um das Bremsmoment geeignet zu reduzieren, sondern nur die Änderung des Antriebsmoments M_DRIVE gegenüber dem zu ermittelnden Referenzwert M_DRIVE_REFVAL betrachtet. Das geschätzte Antriebsmoment wird relativ zu dem Referenzwert ausgewertet, indem Differenz M_DIFF = M_DRIVE - M_DRIVE_REFVAL > M_ANFAHR ist, mit M_ANFAHR = Anfahrschwelle, die den Anfahrwunsch beschreibt.

Nachdem der Anfahrwunsch erkannt wurde, wird das Bremsmoment über eine Bilanzierung von M_DIFF zu M_HANG beeinflußt.

Figur 1a hat den Verfahrensablauf zum Gegenstand. Mit dem gezeigten Ablauf kann die Anfahrsituation von der Situation unterschieden werden, in der das Fahrzeug stillsteht. Ausgehend von einer Situation, wird in Raute 10 festgestellt, ob der Fahrer die Betriebsbremse.betätigt oder die Feststellbremse betätigt ist oder nicht. Liegt ein Signal vor, das einen Fahrzeugstillstand bei gleichzeitiger Bremsbetätigung anzeigt, wird im Aktivierungszweig 14 in Schritt 11 eine Folgeregelung gestartet, daß der Referenzwert M_DRIVE_REFVAL dem Antriebsmoment M_DRIVE folgt. Wenn der im Schritt 11 eingestellte Zustand vorliegt, erfolgt im Schritt 12 eine Begrenzung des Referenzwertes auf einen oberen und unteren Grenzwert G_OBEN, G_UNTEN. Bevorzugt liegt G_OBEN bei ca. 20Nm und G_UNTEN bei ca. -40Nm, wobei die Grenzwerte Fahrzeug abhängig variieren.

Wird in Raute 10 festgestellt, daß die Bremse (n) gelöst wurde(n), werden im Anfahrzweig 15 im Schritt 13 durch einen Größenvergleich festgestellt, ob der aktuelle Wert des Antriebsmoments M_DRIVE kleiner als der Referenzwert M_DRIVE_REFVAL ist. Der Referenzwert M_DRIVE_REFVAL des Fahrzeugantriebsmoments wird dann in Abhängigkeit vom weiteren Größen bzw. Kennwerten bzw. Meßgrößen oder deren Ableitungen, wie das Betätigen des Fahrpedals und/oder den momentanen Fahrzeugzustand wiedergebende Größen (Stillstand, Anfahren, Starten des Motors, Motordrehzahl etc.) an die Änderungen des Antriebsmoments angepaßt oder auch konstant gehalten.

Die Bildung des Referenzwerts M_DRIVE_REFVAL zur relativen Auswertung des Antriebsmoments M_DRIVE wird wie folgt durchgeführt:

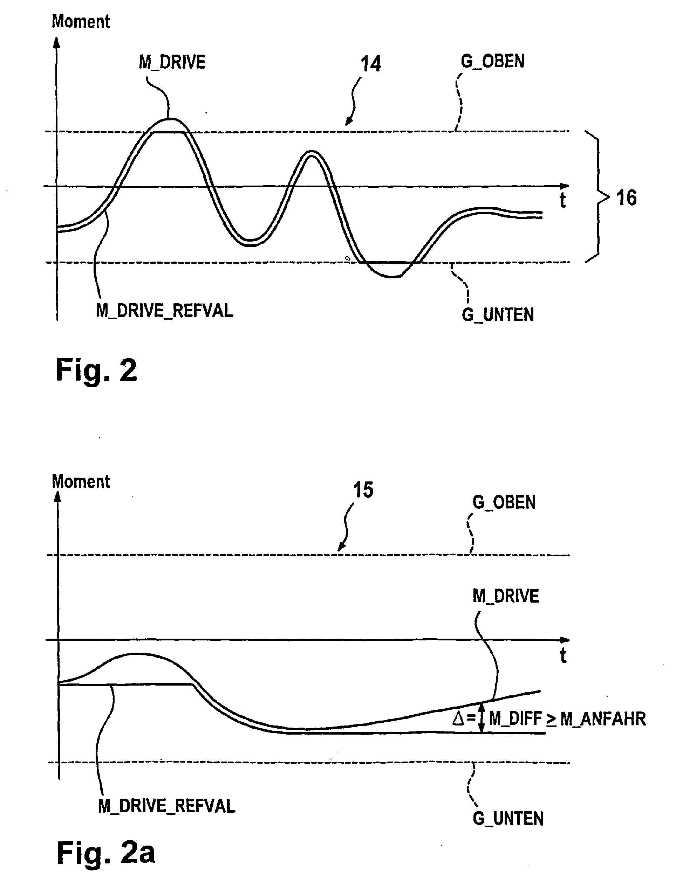

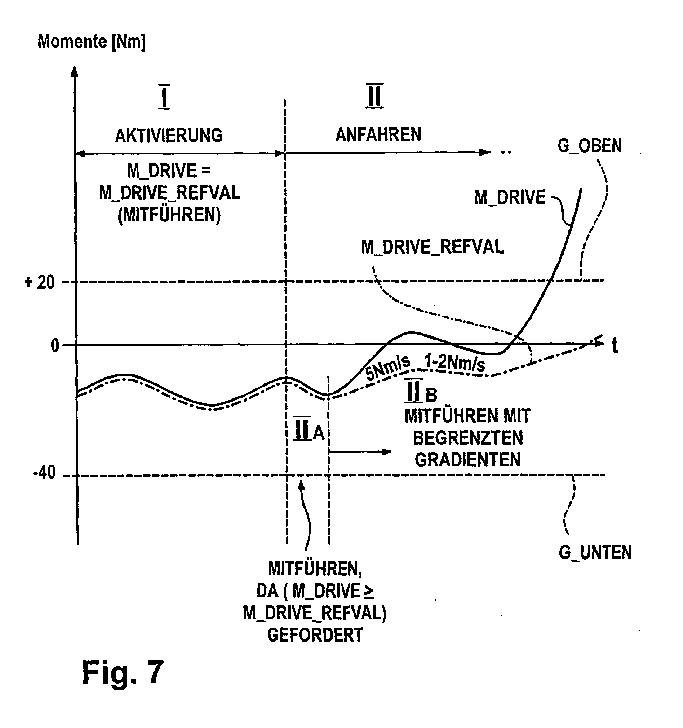

Wie Figur 2 zeigt, wird der Referenzwert M_DRIVE__REFVAL mit dem ermittelten Wert des Antriebsmoments M_DRIVE mitgeführt, d.h. M_DRIVE_REFVAL = M_DRIVE, solange der Fahrer eine Bremseinrichtung betätigt hat. Der Referenzwert M_DRIVE_REFVAL folgt dem Wert des Antriebsmoments M_DRIVE innerhalb eines Toleranzbandes 16, das durch einen oberen Grenzwert G_OBEN und eine unteren Grenzwert G__UNTEN auf physikalisch sinnvolle Werte begrenzt ist. Über- oder unterschreitet der Wert des Antriebsmoments M_DRIVE den oberen oder unteren Grenzwert G_OBEN, G_UNTEN des Toleranzbandes 16, dann wird der Referenzwert M_DRIVE_REFVAL auf dem Grenzwert festgehalten. Der Fahrer kann immer dann nicht anfahren, wenn er selbst eine der beiden Bremseinrichtungen (Betriebsbremse und/oder Feststellbremse) betätigt hält. In diesem Fall wird der Aktivierungszweig 14 im Anfahrhilfealgorithmus durchlaufen. Betätigt der Fahrer die Betriebsbremseinrichtung nicht mehr bzw. wird die Betätigung der Feststellbremse - aus der Konstellation und der Abfolge verschiedener Fahrzeugsignale heraus - als nicht mehr gültig erachtet (Figur 2a), so wird der Anfahrzweig 15 im Algorithmus durchlaufen und M_DRIVE_REFVAL darf nicht mit M_DRIVE erhöht werden- sondern nur mit begrenztem Gradienten - da sonst keine Anfahrbedingung erkannt werden kann. Ein Erhöhung mit begrenztem Gradienten wird im Zusammenhang mit der Figur.7 näher beschrieben.

In den Figuren 1, 2 und 3 wird aus Übersichtsgründen das Mitführen mit begrenzten Gradienten vereinfacht als konstanter Wert der Größe M_DRIVE_REFVAL dargestellt.

Der Sonderfall ist eine betätigte Feststellbremse. Hier kann der Fahrer, insbesondere dann, wenn er die Feststellbremse nur leicht (z.B. erste Raste) betätigt hat, auch gegen die Feststellbremse Anfahren. Ein permanentes Mitführen (wie oben beschrieben) des M_DRIVE_REFVAL mit M_DRIVE würde dazu führen, daß der Anfahrwunsch des Fahrers nie erkannt würde. Daher wird das Mitführen des M_DRIVE_REFVAL nur bis zu einer physikalisch sinnvollen Grenze von ca. 20Nm durchgeführt (oder der Fahrer betätigt das Fahrpedal). Damit wird zu einem erreicht, daß die Fehler in der Schätzung des Antriebsmoments ausreichend bei dieser relativen Auswertung eliminiert werden und zum anderen ein Anfahren gegen die Feststellbremse nach wie vor möglich ist.

Eine weitere Beschränkung des M_DRIVE_REFVAL nach unten auf physikalisch sinnvolle Werte der möglichen Fehler liegt in einem besonders günstigen Ausführungsbeispiel bei ca. -40 Nm. Damit wird insgesamt ein ausreichendes Band (-40Nm bis 20Nm) zur relativen Betrachtung von M_DRIVE geschaffen, zum anderen aber ein Mitführen des M_DRIVE_REFVAL auf physikalisch sinnlose Werte verhindert und damit ein eventuell fehlerhaftes Verhalten des Anfahrhilfe verhindert. Der Anfahrwunsch des Fahrers kann auch im Fehlerfall noch erkannt werden, wenn mehr als 20Nm aufgebaut wird.

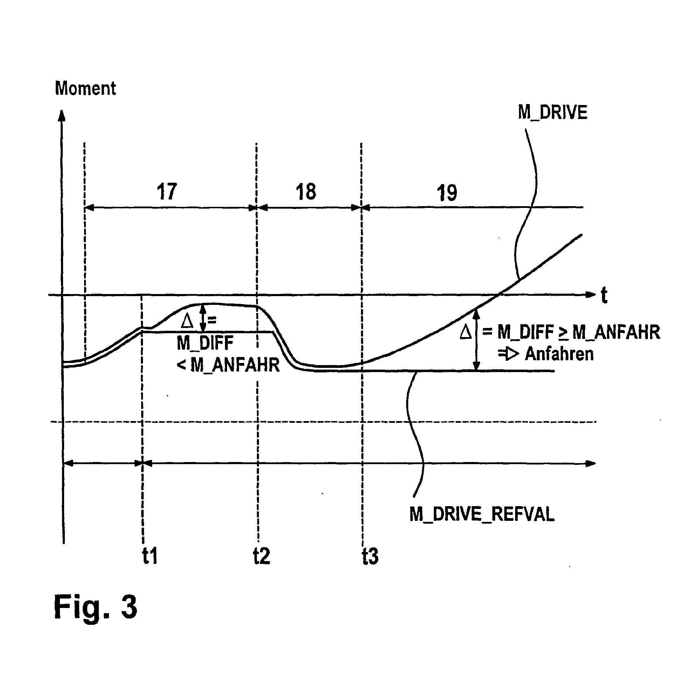

Wie die Figuren 2a und 3 zeigen, darf im Anfahrzweig 15 der Referenzwert M_DRIVE_REFVAL jedoch mit einem kleiner werdenden Antriebsmoment M_DRIVE mit nach unten geführt werden (bis auf die den Grenzwert G_UNTEN). Dadurch wird folgender Fahrzeugzustand bzw. folgende Situation berücksichtigt: Wenn der Fahrer trotz betätigter Betriebsbremse bis zum Zeitpunkt t1 über die Kupplung Antriebsmoment aufbaut, wird, wie oben beschrieben, der M_DRIVE_REFVAL mit M_DRIVE bis auf maximal G_OBEN mitgeführt. Löst der Fahrer nun die Bremse zum Zeitpunkt t1, wird der Referenzwert M_DRIVE_REFVAL auf dem aktuellen Referenzwert festgehalten und der Fahrer muß von diesem Niveau aus weiter Antriebsmoment aufbauen, bis M_DIFF≥M_ANFAHR ist, um das Bremsmoment über die Anfahrhilfe abbauen zu können. Das Mitführen bis auf maximal G_OBEN sorgt dafür, daß der Fahrer dieses Verhalten nur als leichte Komforteinbuße wahrnimmt, ein Anfahren jedoch ermöglicht.

Wie Figur 3 zeigt, bricht der Fahrer den Anfahrvorgang 17 bei einem Fahrzeugzustand M_DIFF< M_ANFAHR zum Zeitpunkt t2 ab, bis zu dem er über die Kupplung Antriebsmoment aufgebaut hat. Der Fahrer kuppelt zum Zeitpunkt t2 aus, so daß der Anfahrvorgang bei 18 unterbrochen ist, und das Antriebsmoment in Richtung des Grenzwertes G_UNTEN reduziert wird. Dabei sorgt das oben beschriebene Mitführen des M_DRIVE_REFVAL mit dem Antriebsmoment in Richtung des unteren Grenzwertes G_UNTEN dafür, daß beim erneuten Anfahren 19 nicht der zuvor gelernte (zu große) Wert von M_DRIVE_REFVAL zur relativen Auswertung benutzt wird. Die Anfahrerkennung basiert dann wieder auf dem kleineren, nach unten mitgeführten Wert für M_DRIVE_REFVAL.

Ein Festhalten des Referenzwertes M_DRIVE_REFVAL muß dann durchgeführt werden, wenn der Fahrer Gas gibt. Dabei kann die Schätzung des Antriebsmoments insbesondere bei sehr dynamischen Vorgängen (schnelles Gasgeben oder schnelles Gaswegnehmen) fehlerbehaftet sein. Ein Mitführen des Referenzwertes M_DRIVE_REFVAL wird aufgrund dieser Unsicherheit vermieden, um keine Fehlauslösung der Anfahrhilfe zu erreichen oder ein zu schweres Lösen des Bremspedals zu erzielen.

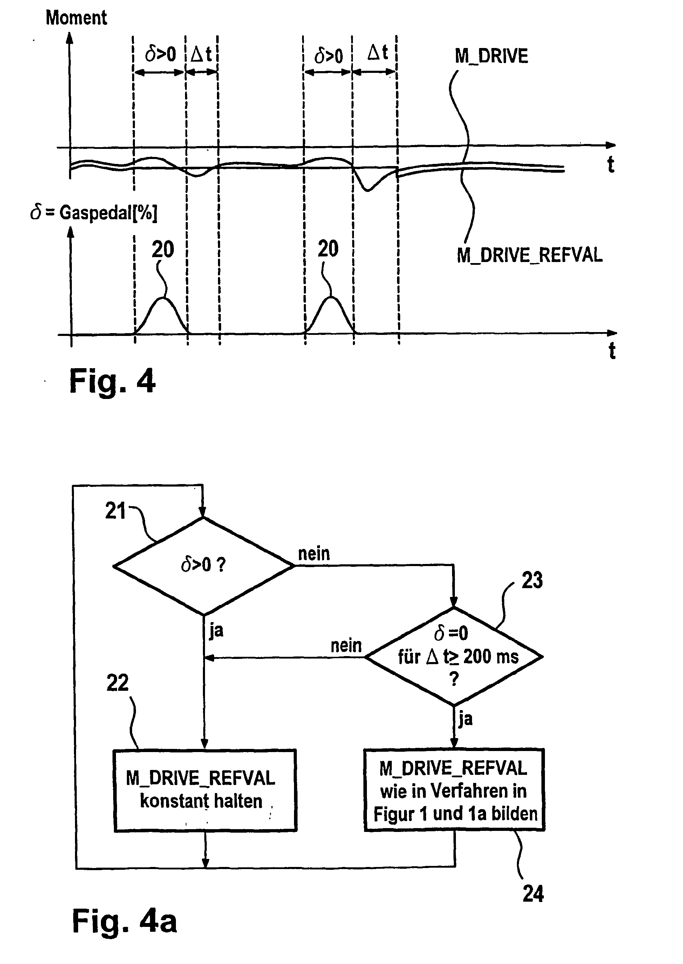

Figur 4 zeigt ein Diagramm über den zeitlichen Verlauf des Antriebsmoment-Referenzwerts M_DRIVE_REFVAL nach Maßgabe einer dynamischer Fahrpedalbetätigung. Dabei wird in einer besonders vorteilhaften Ausführung nach dem Lösen des Fahrpedals 20 bei $\delta = 0$ ($\delta$=Fahrpedalbetätigung in %) während einer vorgegebenen Zeitdauer $\Delta t$ (z.B. 200ms - 3000ms) der Referenzwert M_DRIVE_REFVAL auf dem aktuellen Wert konstant gehalten. Damit wird der Schätzung des Antriebsmoments ermöglicht, sich einzuschwingen. Figur 4a hat den Verfahrensablauf zum Gegenstand. Mit dem gezeigten Ablauf kann die Situation einer dynamischen Fahrpedalbetätigung festgestellt werden. In Raute 21 wird festgestellt, ob die Fahrpedalbetätigung $\delta$>0 ist, oder nicht. Liegt ein Signal vor, das eine Fahrpedalbetätigung größer 0 anzeigt, wird der Referenzwert auf im Schritt 22 einem Wert von M_DRIVE festgehalten, bei dem ein Bremspedal betätigt war. Verringert sich das Signal der Fahrpedalbetätigung $\delta$ auf Null, wird in Raute 23 festgestellt , ob die Haltezeit $\Delta t$ des Referenzwertes M_DRIVE_REFVAL bereits abgelaufen ist, oder nicht. Ist die Haltezeit noch nicht abgelaufen, wird der Zyklus erneut durchlaufen und der Referenzwert im Schritt 22 festgehalten. Ist die Haltezeit abgelaufen, wird im Schritt 24 der Referenzwert entsprechend der Beschreibung der Figuren 1 und 1a gebildet.

Die relative Auswertung des geschätzten Antriebsmoments hat zur Folge, daß auch die Schwellen zu Erkennung eines Anfahrvorgangs auf den Referenzwert M_DRIVE_REFVAL angepaßt werden. D.h. die zuvor absolut angegebenen Schwellen werden um den Wert von M_DRIVE_REFVAL erhöht. Damit ergeben sich in einem besonders vorteilhaften Ausführungsbeispiel folgende Schwellen:

- Bergauf Anfahren: 5*Drive-Off-Schwelle + M_DRIVE_REFVAL
- Ebene Anfahren: 2*Drive-Off-Schwelle + M_DRIVE_REFVAL
- Bergab Anfahren: 3*Drive-Off-Schwelle + M_DRIVE_REFVAL

Wobei der Grundwert einer Erkennung des Anfahrvorgangs Drive-Off-Schwelle in diesem Ausführungsbeispiel in einem Bereich von 3-5Nm liegt, vorzugsweise bei 3Nm.

Im Allgemeinen liegt die Schwelle beim bergauf Anfahren höher als in der Ebene. In der Ebene muß der Anfahrvorgang so schnell wie möglich erkannt werden. Bergauf muß ein Wegrollen dagegen verhindert werden und daher die Schwelle größer ausfallen. Bergab soll ein Wegrollen durch ein fehlerhaftes Erkennen einer Anfahrbedingung verhindert werden, daher liegt die Schwelle etwas höher als in Ebene.

Damit ergibt sich die Erkennung einer Anfahrbedingung aus

- Bergauf: M_DIFF = M_DRIVE - M_DRIVE_REFVAL >= 5*Drive-Off-Schwelle
- Ebene: M_DIFF = M_DRIVE - M_DRIVE_REFVAL >= 2*Drive-Off-Schwelle
- Bergab: M_DIFF = M_DRIVE - M_DRIVE_REFVAL >= 3*Drive-Off-Schwelle

Die Bilanzierung mit dem Hangabtriebsmoment im Anfahrvorgang sieht dann mit der relativen Auswertung des Antriebsmoments wie folgt aus:

- Bergauf: M_SUMME = (M_BREMS + M_DIFF) >= M_HANG

In der Ebene und bergab kann M_DIFF als Triggerereignis zum schnellen Lösen der Bremse ausgewertet werden. M_DIFF kann jedoch auch vorteilhaft zur Gewichtung der Lösegeschwindigkeit des Bremsmoments nach erkannter Anfahrbedingung herangezogen werden.

Es gibt Anfahrhilfen, die als Aktivierungsbedingungen neben der Betätigung der Betriebbremse durch den Fahrer alternativ auch über die Betätigung der Feststellbremse aktiviert werden können. Das stellt sicher, daß der Fahrer in ein geparktes Fahrzeug einsteigen kann, die Kupplung betätigen, den Motor starten, die Feststellbremse lösen und von der aktivierten Anfahrhilfe beim Anfahren am Hang unterstützt wird.

Dabei wird das Bremsmoment in der Betriebsbremse allein von der aktiven Betriebsbremse aufgebracht und nicht durch den Fahrer. Hier ist also eine Aktivierung unmittelbar nach dem Starten des Motors erforderlich.

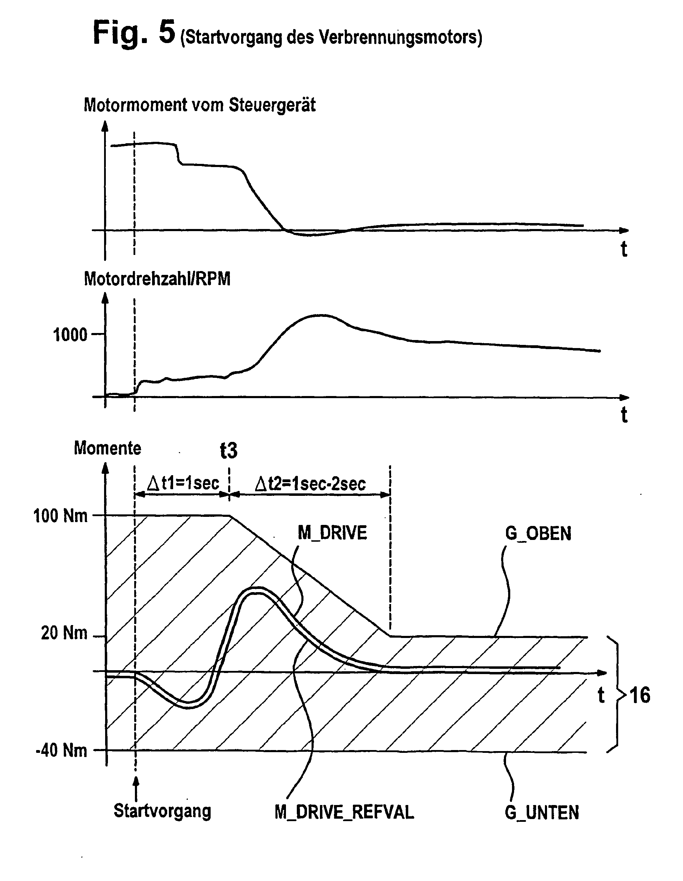

Dabei ist die Schätzung des Antriebsmoments insbesondere gemäß der Beschreibung in der WO99/20921 sehr fehlerbehaftet, da die Eingangsgrößen für die Antriebsmomentenermittlung im Startvorgang des Motors und kurz danach sehr fehlerbehaftet sind. Bei den ersten Umdrehungen des Motors weicht sowohl die Messung der Motordrehzahl stark von der tatsächlichen Drehzahl ab als auch das vom Motorsteuergerät gelieferte Motormoment vom tatsächlich anliegenden Motormoment. Daher wird das Toleranzband 16 zur Begrenzung des Referenzwertes M_DRIVE_REFVAL über eine vorgegebene Zeitdauer, wie in Figur 5 dargestellt, ab dem Start des Fahrzeugs vergrößert. Unter Starten des Fahrzeugs wird hier die Zeit verstanden, die vom Zündungsneustart des Motors bis er zum Erreichen eines stabilen Leerlaufzustandes des Motors ohne Anlasser benötigt wird. Damit wird erreicht, daß M_DRIVE_REFVAL in der Startphase mit dem fehlerhaften M_DRIVE mitgeführt werden kann und keine fehlerhafte Anfahrbedingung erkannt wird. Figur 5 zeigt ein Diagramm über den zeitlichen Verlauf des geschätzten Fahrzeugantriebsmoments und des Fahrzeugantriebsmoment-Referenzwertes nach Maßgabe des vom Steuergerät zur Verfügung gestellten Motormoment und der Motordrehzahl während der Startphase. Nach der Startphase wird dabei über eine Zeitdauer zwischen 1 bis 2 Sekunden, vorzugsweise 1 Sekunde, der obere Grenzwert G_OBEN des Toleranzbandes 16 auf einen Wert von vorzugsweise 100Nm heraufgesetzt. Selbstverständlich kann der Wert fahrzeugspezifisch z.B. mittels Kennwerten modifiziert werden. Nach Ablauf der vorgegebenen Zeitdauer $\Delta$t1, während der das Toleranzband aufgeweitet wurde, wird zum Zeitpunkt t3 über eine Zeitdauer $\Delta$t2 von 1 bis 2 Sekunden der erhöhte Grenzwert auf den Grenzwert G_OBEN zurückgeführt.

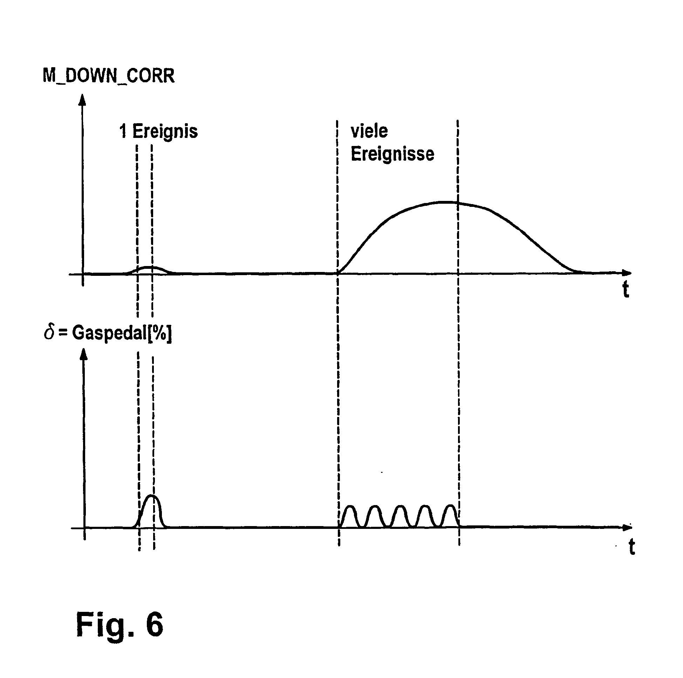

Die Schätzung des Antriebsmoments M_DRIVE kann auch fehlerhaft werden, wenn der Fahrer sehr schnell und oft das Fahrpedal betätigt (d.h. am Gaspedal "spielt"). Dabei gibt der Fahrer große Änderungen in kurzer zeitlicher Folge hintereinander am Fahrpedal vor. Diese stark dynamischen Änderungen der Motordrehzahl verursachen meist eine ansteigende Schätzung des Antriebmoments M_DRIVE, obwohl kein oder nur wenig Antriebsmoment tatsächlich zur Verfügung steht. In dieser Situation ist es erforderlich, daß ein Korrekturmoment in die Bilanzierung zum Abbau des Bremsmoments eingeht. Figur 6 zeigt ein Diagramm über den zeitlichen Verlauf des ermittelten Zusatzmoments M_DOWN_CORR nach Maßgabe der Betätigungsgeschwindigkeit des Fahrpedals und der Anzahl der Betätigungen des Fahrpedals. Es wird so ein Zusatzmoment M_DOWN_CORR ermittelt, welches dieses "Spielen" am Gaspedal erkennt, in das die Größe der Änderung des Betätigungsgrades am Gaspedal klassifiziert und auf ein Gedächtnis (Filter) gegeben wird. Dieses Filter sorgt dafür, daß ein einziges Ereignis (Gaspedal einmal heftig betätigen z.B. beim schnellen Anfahren mit viel Gas) nur ein kleines, vernachlässigbares Korrekturmoment verursacht. Eine häufige, heftige Betätigung schnell hintereinander verursacht dagegen ein größeres Zusatz-Korrekturmoment. Das Filter sorgt für ein Aufschwingen des M_DOWN_CORR bei aufeinander folgenden Ereignissen und ein Abklingen des M_DOWN_CORR bei Ausbleiben der Ereignisse. Ein fehlerhaftes Erkennen einer Anfahrbedingung wird damit vermieden, das Fahrzeug rollt damit nicht entgegen der gewünschten Fahrtrichtung weg. Das Verfahren zur Ermittlung des Zusatzmomentes M_DOMN_CORR ist durch die folgenden Schritte gekennzeichnet:

1.Schritt:

Ermitteln der Fahrpedalbetätigungsgeschwindigkeit in %

$$\Delta\_gas\_ped = \frac{\delta(n) - \delta(n-1)}{\Delta T_{Loop}}$$ mit Änderung pro Zyklus (Loop) oder alternativ mit Änderungen über mehrere Loops.

2.Schritt:

Klassifizieren der Änderungen in
<5%/Loop - nothing(X) → M_CORR_noth = 0 Nm
>5%/Loop - small(S) → M_Corr_min = 10 bis 50 Nm, vorzugsweise 35 Nm
≥10%/Loop - middle(M) → M_Corr_mid = 50 bis 150 Nm, vorzugsweise 75 Nm
>20%/Loop - big(B) →M_Corr_max = 150 bis 400 Nm, vorzugsweise 300 Nm

3.Schritt:

Die klassifizierten Ereignisse werden mit der Klasse in einem Register (Totzeit Pipeline) abgelegt. Es entsteht z.B. ein Register mit folgender Ereignissfolge:

xxx....xBxMS , wobei die Totzeit des Registers der Zahl der Ereignisse multipliziert mit $T_{Loop}$ ist. S stellt das Signal vom aktuellen Zeitpunkt dar.

4.Schritt:

Im diesem Schritt werden die Ereignisse um eine Loop nach links verschoben (shift).

5.Schritt:

Das Ereignis, das in dem Register nach links verschoben wurde, wird in einem Filter(vorzugsweise $PT_1$-Filter) gefiltert. Im vorliegenden Fall X=>M_CORR_NOTH = 0 Nm
X → $PT_1$- Filter→M_DOWN_CORR

Das so ermittelte M_DONN_CORR geht dann in die Bilanzierung wie folgt ein:

- Bergauf: M_SUMME = (M_BREMS + M_DIFF) >= M_HANG + M_DOWN_CORR
Bergab geht M_DOWN_CORR nur in das Löseverfahren des Bremsmoments ein, wenn die Geschwindigkeit der Bremsmomentenreduktion durch M_DIFF wie oben beschrieben beeinflußt wird.

Um zu vermeiden, daß zusätzliche elektrische oder mechanische Lasten, die in der modellbasierten Ermittlung des Antriebsmomentes nicht berücksichtigt werden können, eine ungewollte Deaktivierung der Anfahrhilfe herbeiführen, kann im Anfahrzweig , solange der Fahrer das Fahrpedal nicht betätigt, der Referenzwert M_DRIVE_REFVAL innerhalb seines Toleranzbandes 16 in Richtung größerer und kleinere Werte mitgeführt werden, wobei die Geschwindigkeit dieser Anpassung eine Limitierung erfährt (Figur 7). Bei typischen Anfahrvorgängen, bei denen eine relativ schnelle zeitliche Änderung des M_DRIVE angenommen wird, soll durch ein, in der Geschwindigkeit begrenztes, Mitführen des M_DRIVE_REFVAL keine spürbare Verzögerung des Anfahrvorganges eintreten. Bei Änderungen des Belastungszustandes des Verbrennungsmotors durch Zu- oder Abschalten von elektrischen bzw. mechanischen Verbrauchern wird dagegen eine langsame bzw. in ihrer absoluten Höhe geringere Änderung des M_DRIVE angenommen. Dieser langsamen Änderung des M_DRIVE kann der M_DRIVE_REFVAL aufgrund der getroffenen Maßnahme besser folgen als den relativ schnellen Änderungen während eines Anfahrvorgangs. Um eine zusätzliche Sicherheit gegen ungewolltes Deaktivieren zu erreichen, erfolgt das Mitführen des M_DRIVE_REFVAL in Richtung größerer Werte mit einer höheren zulässigen Geschwindigkeit (typisch 5Nm/s) als in Richtung kleinerer Werte (typisch 1..2Nm/s).

Eine vom Fahrer ungewollte Deaktivierung infolge des Schaltens einer Last wird damit unwahrscheinlicher, wobei die Vorteile der relativen Bewertung des Antriebsmomentes weiterhin zum Tragen kommen.

**Patentansprüche**

1.  Verfahren zum Unterstützen des Anfahren eines Fahrzeugs an einem Hang, bei dem unter Berücksichtigung eines Hangabtriebsmoments ein Fahrzeugbremsmoment entsprechend einem geschätzten Fahrzeugantriebsmoment verändert wird, mit den Schritten, Ermitteln eines Fahrzeugantriebsmoment-Referenzwertes, Vergleichen des Referenzwertes mit dem geschätzten Fahrzeugantriebsmoment, und Beeinflussen des Bremsmomentes nach Maßgabe des Vergleichsergebnisses, **dadurch gekennzeichnet, daß** der Fahrzeugantriebsmoment-Referenzwert innerhalb eines Toleranzbandes solange mit dem Fahrzeugantriebsmoment mitgeführt wird, bis ein Bremspedal und/oder eine Feststellbremse gelöst ist.

2.  Verfahren nach Anspruch 1, **dadurch gekennzeichnet, daß** der Fahrzeugantriebsmoment-Referenzwert nach Maßgabe des Fahrzeugantriebsmoments ermittelt wird.

3.  Verfahren nach Anspruch 1 oder 2, **dadurch gekennzeichnet, daß** der Referenzwert des Fahrzeugantriebsmoments in Abhängigkeit vom weiteren Größen bzw. Kennwerten bzw. Meßgrößen oder deren Ableitungen, wie das Lösen des Bremspedals und/oder das Betätigen des Fahrpedals und/oder den momentanen Fahrzeugzustand wiedergebende Größen (Stillstand, Anfahren, Starten des Motors, Motordrehzahl etc.) ausgewertet bzw. beeinflußt wird.

4.  Verfahren nach einem der Ansprüche 1 bis 3, **dadurch gekennzeichnet, daß** der Fahrzeugantriebsmoment-Referenzwert innerhalb des Toleranzbandes mit dem Fahrzeugantriebsmoment auch hin zu dem unteren Toleranzband-Grenzwert mitgeführt wird, wenn mindestens das Bremspedal gelöst wurde.

5.  Verfahren nach einem der Ansprüche 1 bis 4, **dadurch gekennzeichnet, daß** der Fahrzeugantriebsmoment-Referenzwert innerhalb den Toleranzbandes mit dem Fahrzeugantriebsmoment in Abhängigkeit von einer Fahrpedal-Größe hin zu dem unteren Toleranzband-Grenzwert mitgeführt wird, wenn mindestens das Bremspedal gelöst wurde.

6.  Verfahren nach Anspruch 5, **dadurch gekennzeichnet, daß** der Fahrzeugantriebsmoment-Referenzwert erst nach einer vorgegebenen Zeitdauer hin zu dem unteren Toleranzband-Grenzwert mitgeführt wird, wobei die Zeitdauer in Abhängigkeit von der Fahrpedal-Größe gestartet wird.

7.  Verfahren nach Anspruch 5 oder 6, **dadurch gekennzeichnet, daß** der Fahrzeugantriebsmoment-Referenzwert erst nach einer vorgegebenen Zeitdauer hin zu dem unteren Toleranzband-Grenzwert mitgeführt wird, wobei die Zeitdauer in Abhängigkeit von einem Grenzwert der Motordrehzahl gestartet wird.

8.  Verfahren nach einem der Ansprüche 1 bis 7, **dadurch gekennzeichnet, daß** der Fahrzeugantriebsmoment-Referenzwert innerhalb des Toleranzbandes mit dem Fahrzeugantriebsmoment auch mit begrenzten Gradienten hin zu dem oberen Toleranzband-Grenzwert mitgeführt wird, wenn das Bremspedal gelöst wurde.

9.  Verfahren nach einem der Ansprüche 1 bis 7, **dadurch gekennzeichnet, daß** der Fahrzeugantriebsmoment-Referenzwert innerhalb des Toleranzbandes mit dem Fahrzeugantriebsmoment auch mit begrenzten Gradienten hin zu dem unteren Toleranzband-Grenzwert mitgeführt wird, wenn das Bremspedal gelöst würde.

10. Verfahren nach Anspruch 8 oder 9, **dadurch gekennzeichnet, daß** die begrenzten Gradienten nach Maßgabe der Änderung des Fahrzeugantriebsmoments ermittelt werden.

11. Verfahren nach einem der Ansprüche 8 bis 10, **dadurch gekennzeichnet, daß** das Fahrzeugantriebsmoment-Referenzwert mit dem Fahrzeugantriebsmoment mitgeführt wird, wenn das Fahrzeugantriebsmoment sich in Richtung des unteren Grenzwertes bewegt und dabei kontinuierlich den Wert des Fahrzeugantriebsmoments unterschreitet.

12. Verfahren nach einem der Ansprüche 8 bis 11, **dadurch gekennzeichnet, daß** der Fahrzeugantriebsmoment-Referenzwert dem Fahrzeugantriebsmoment mit begrenzten Gradienten hin zu dem oberen oder unteren Toleranzbund-Grenzwert nur folgt, wenn die Fahrpedal-Größe einen momentanen Fahrzeugzustand wiedergibt, bei dem das Fahrpedal gelöst ist.

13. Verfahren nach Anspruch 12, **dadurch gekennzeichnet, daß** der Fahrzeugantriebsmoment-Referenzwert dem Fahrzeugantriebsmoment mit begrenzten Gradienten hin zu dem oberen Toleranzband-Grenzwert nur folgt, wenn der Grenzwert der Motordrehzahl unterschritten wird.

14. Verfahren zum Unterstützen des Anfahrens eines Fahrzeugs an einem Hang, brei dem unter Berücksichtigung eines Hangabtriebsmoments ein Fahrzeugbremsmoment entsprechend einem geschätzten Fahrzeugantriebsmoment verändert wird, nach einem der Ansprüche 7 bis 13, **dadurch gekennzeichnet, daß** beim Starten des Fahrzeugs die Anfahr-Unterstützung beim Vorliegen von Eintrittsbedingungen selbsttätig ausgelöst wird, die von Fahrzeugzuständen abgeleitet werden und daß beim Starten mindestens der obere Toleranzband-Grenzwert während einer Zeitdauer heraufgesetzt wird.

15. Verfahren zum Unterstützen des Anfahrens eines Fahrzeugs an einem Hang, bei dem unter Berücksichtigung eines Hangabtriebsmoments ein Fahrzeugbremsmoment entsprechend einem geschätzten Fahrzeugantriebsmoment verändert wird, nach einem der Ansprüche 1 bis 13, **dadurch gekennzeichnet, daß** in Abhängigkeit von dem Wert der Betätigungsgeschwindigkeit des Fahrpedals und der Anzahl der Betätigungen des Fahrpedals während einer vorgegebenen Zeitdauer ein Zusatzmoment M_DOWN_CORR ermittelt wird, das bei der Anfahr-Unterstützung berücksichtigt wird.

16. Verfahren nach Anspruch 15, **dadurch gekennzeichnet, daß** das Zusatzmoment M_DOWN_CORR und das Hangabtiebsmoment M_HANG summiert werden.

17. Vorrichtung zum Unterstützen des Anfahrens eines Fahrzeugs an einem Hang, bei dem unter Berücksichtigung eines Hangabtriebsmoments ein Fahrzeugbremsmoment entsprechend einem geschätzten Fahrzeugantriebsmoment verändert wird, mit einer Ermittlungseinheit zum Ermitteln eines Fahrzeugantriebsmoment-Referenzwertes, einer Vergleichseinheit zum Vergleichen des Referenzwertes mit dem geschätzten Fahrzeugantriebsmoment, und einer Vorrichtung zum Beeinflussen des Bremsmomentes nach Maßgabe des Vergleichsergebnisses, **dadurch gekennzeichnet, daß** die Ermittlungseinheit den Fahrzeugantriebsmoment-Referenzwert innerhalb eines Toleranzbandes mit dem Fahrzeugantriebsmoment mitführt, bis ein Lösesignal des Bremspedals vorliegt.

18. Vorrichtung nach Anspruch 17, **dadurch gekennzeichnet, daß** die Ermittlungseinheit den Fahrzeugantriebsmoment-Referenzwert nach Maßgabe des Fahrzeugantiebsmoments ermittelt.

19. Vorrichtung nach Anspruch 17 oder 18, **dadurch gekennzeichnet, daß** die Ermittlungseinheit den Fahrzeugantriebsmoment-Referenzwert auch nach Maßgabe von weiteren Meßgrößen, die das Lösen des Bremspedals und/oder das Betätigen des Fahrpedals wiedergeben, und/oder mit den momentanen Fahrzeugzustand wiedergebende Größen (Stillstand, Anfahren, Starten des Motors etc.) ausgewertet.

**Claims**

1. Method for assisting the starting of a vehicle on a slope, in which, taking into account a slope downforce moment, a vehicle brake torque is varied according to an estimated vehicle drive torque, with the steps of determining a vehicle drive torque reference value, of comparing the reference value with the estimated vehicle drive torque and of influencing the brake torque in accordance with the comparison result, **characterized in that** the vehicle drive torque reference value is carried along with the vehicle drive torque, within a tolerance band, until a brake pedal and/or parking brake is released.

2. Method according to Claim 1, **characterized in that** the vehicle drive torque reference value is determined in accordance with the vehicle drive torque.

3. Method according to Claim 1 or 2, **characterized in that** the reference value of the vehicle drive torque is evaluated or influenced as a function of further variables or characteristic values or measured quantities or their derivatives, such as the release of the brake pedal and/or the actuation of the accelerator pedal and/or variables reproducing the instantaneous vehicle state (standstill, start-up, engine starting, engine rotational speed, etc.).

4. Method according to one of Claims 1 to 3, **characterized in that** the vehicle drive torque reference value is also carried along with the vehicle drive torque, within the tolerance band, towards the lower tolerance band limit value when at least the brake pedal has been released.

5. Method according to one of Claims 1 to 4, **characterized in that** the vehicle drive torque reference value is carried along with the vehicle drive torque, within the tolerance band, as a function of an accelerator pedal variable, towards the lower tolerance band limit value, when at least the brake pedal has been released.

6. Method according to Claim 5, **characterized in that** the vehicle drive torque reference value is carried along towards the lower tolerance band limit value only after a predetermined time duration, the time duration being started as a function of the accelerator pedal variable.

7. Method according to Claim 5 or 6, **characterized in that** the vehicle drive torque reference value is carried along towards the lower tolerance band limit value only after a predetermined time duration, the time duration being started as a function of a limit value of the engine rotational speed.

8. Method according to one of Claims 1 to 7, **characterized in that** the vehicle drive torque reference value is carried along with the vehicle drive torque, within the tolerance band, towards the upper tolerance band limit value even with limited gradients when the brake pedal has been released.

9. Method according to one of Claims 1 to 7, **characterized in that** the vehicle drive torque reference value is carried along with the vehicle drive torque, within the tolerance band, towards the lower tolerance band limit value even with limited gradients when the brake pedal has been released.

10. Method according to Claim 8 or 9, **characterized in that** the limited gradients are determined in accordance with the change in the vehicle drive torque.

11. Method according to one of Claims 8 to 10, **characterized in that** the vehicle drive torque reference value is carried along with the vehicle drive torque when the vehicle drive torque moves in the direction of the lower limit value and at the same time continuously undershoots the value of the vehicle drive torque.

12. Method according to one of Claims 8 to 11, **characterized in that** the vehicle drive torque reference value follows the vehicle drive torque towards the upper or lower tolerance band limit value with limited gradients only when the accelerator pedal variable reproduces an instantaneous vehicle state in which the accelerator pedal is released.

13. Method according to Claim 12, **characterized in that** the vehicle drive torque reference value follows the vehicle drive torque towards the upper tolerance band limit value with limited gradients only when the limit value of the engine rotational speed is undershot.

14. Method for assisting the starting of a vehicle on a slope, in which, taking into account a slope downforce moment, a vehicle brake torque is varied according to an estimated vehicle drive torque, according to one of Claims 1 to 13, **characterized in that**, when the vehicle is being started, the starting assistance is triggered automatically in the presence of onset conditions which are derived from vehicle states, and **in that**, during starting, at least the upper tolerance band limit value is raised for a time duration.

15. Method for assisting the starting of a vehicle on a slope, in which, taking into account a slope downforce moment, a vehicle brake torque is varied according to an estimated vehicle drive torque, according to one of Claims 1 to 13, **characterized in that** an additional moment M_DOWN_CORR, which is taken into account in the starting assistance, is determined as a function of the value of the speed of actuation of the accelerator pedal and of the number of actuations of the accelerator pedal for a predetermined time duration.

16. Method according to Claim 15, **characterized in that** the additional moment M_DOWN_CORR and the slope downforce moment M_HANG are summed.

17. Device for assisting the starting of a vehicle on a slope, in which, taking into account a slope downforce moment, a vehicle brake torque is varied according to an estimated vehicle drive torque, with a determination unit for determining a vehicle drive torque reference value, with a comparison unit for comparing the reference value with the estimated vehicle drive torque, and with a device for influencing the brake torque in accordance with the comparison result, **characterized in that** the determination unit carries along the vehicle drive torque reference value with the vehicle drive torque within a tolerance band until a signal for the release of the brake pedal is present.

**18.** Device according to Claim 17, **characterized in that** the determination unit determines the vehicle drive torque reference value in accordance with the vehicle drive torque.

**19.** Device according to Claim 17 or 18, **characterized in that** the determination unit also evaluates the vehicle drive torque reference value in accordance with further measured quantities which reproduce the release of the brake pedal and/or the actuation of the accelerator pedal and/or with quantities reproducing the instantaneous vehicle state (standstill, start-up, engine starting, etc.).

**Revendications**

**1.** Procédé d'assistance au démarrage d'un véhicule dans une pente, selon lequel un moment de freinage du véhicule est modifié en fonction d'un moment d'entraînement estimé du véhicule en tenant compte d'un moment descensionnel de la pente, comprenant les étapes de détermination d'une valeur de référence du moment d'entraînement du véhicule, comparaison de la valeur de référence avec le moment d'entraînement estimé du véhicule et influence du moment de freinage en fonction du résultat de la comparaison, **caractérisé en ce que** la valeur de référence du moment d'entraînement du véhicule est asservie au moment d'entraînement du véhicule à l'intérieur d'une bande de tolérance jusqu'à ce qu'une pédale de frein et/ou un frein de stationnement soit relâché.

**2.** Procédé selon la revendication 1, **caractérisé en ce que** la valeur de référence du moment d'entraînement du véhicule est déterminée en fonction du moment d'entraînement du véhicule.

**3.** Procédé selon la revendication 1 ou 2, **caractérisé en ce que** la valeur de référence du moment d'entraînement du véhicule est interprétée ou influencée en fonction d'autres grandeurs ou valeurs caractéristiques ou encore grandeurs mesurées ou leurs dérivées, comme des grandeurs qui restituent le relâchement de la pédale de frein et/ou l'actionnement de la pédale d'accélérateur et/ou l'état momentané du véhicule (immobilisation, démarrage, démarrage du moteur, vitesse de rotation du moteur, etc.).

**4.** Procédé selon l'une des revendications 1 à 3, **caractérisé en ce que** la valeur de référence du moment d'entraînement du véhicule est asservie au moment d'entraînement du véhicule à l'intérieur de la bande de tolérance même jusqu'à la valeur limite inférieure de la bande de tolérance quand au moins la pédale de frein a été relâchée.

**5.** Procédé selon l'une des revendications 1 à 4, **caractérisé en ce que** la valeur de référence du moment d'entraînement du véhicule est asservie au moment d'entraînement du véhicule à l'intérieur de la bande de tolérance en fonction d'une grandeur de pédale d'accélérateur jusqu'à la valeur limite inférieure de la bande de tolérance quand au moins la pédale de frein a été relâchée.

**6.** Procédé selon la revendication 5, **caractérisé en ce que** la valeur de référence du moment d'entraînement du véhicule n'est asservie jusqu'à la valeur limite inférieure de la bande de tolérance qu'après une durée prédéfinie, la durée étant démarrée en fonction de la grandeur de pédale d'accélérateur.

**7.** Procédé selon la revendication 5 ou 6, **caractérisé en ce que** la valeur de référence du moment d'entraînement du véhicule n'est asservie jusqu'à la valeur limite inférieure de la bande de tolérance qu'après une durée prédéfinie, la durée étant démarrée en fonction d'une valeur limite de la vitesse de rotation du moteur.

**8.** Procédé selon l'une des revendications 1 à 7, **caractérisé en ce que** la valeur de référence du moment d'entraînement du véhicule est asservie au moment d'entraînement du véhicule à l'intérieur de la bande de tolérance jusqu'à la valeur limite supérieure de la bande de tolérance même avec des gradients limités lorsque la pédale de frein a été relâchée.

**9.** Procédé selon l'une des revendications 1 à 7, **caractérisé en ce que** la valeur de référence du moment d'entraînement du véhicule est asservie au moment d'entraînement du véhicule à l'intérieur de la bande de tolérance jusqu'à la valeur limite inférieure de la bande de tolérance même avec des gradients limités lorsque la pédale de frein a été relâchée.

**10.** Procédé selon la revendication 8 ou 9, **caractérisé en ce que** les gradients limités sont déterminés en fonction de la modification du moment d'entraînement du véhicule.

**11.** Procédé selon l'une des revendications 8 à 10, **caractérisé en ce que** la valeur de référence du moment d'entraînement du véhicule est asservie au moment d'entraînement du véhicule lorsque le moment d'entraînement du véhicule se déplace en direction de la valeur limite inférieure et est ici continuellement inférieur à la valeur du moment d'entraînement du véhicule.

**12.** Procédé selon l'une des revendications 8 à 11, **caractérisé en ce que** la valeur de référence du moment d'entraînement du véhicule ne suit le moment d'entraînement du véhicule avec des gradients limités jusqu'à la valeur limite supérieure ou inférieure de la bande de tolérance que lorsque la grandeur de pédale d'accélérateur restitue un état momentané du véhicule dans lequel la pédale d'accélérateur est relâchée.

13. Procédé selon la revendication 12, **caractérisé en ce que** la valeur de référence du moment d'entraînement du véhicule ne suit le moment d'entraînement du véhicule avec des gradients limités jusqu'à la valeur limite supérieure de la bande de tolérance que lorsque la vitesse de rotation du moteur devient inférieure à la valeur limite.

14. Procédé d'assistance au démarrage d'un véhicule dans une pente, selon lequel un moment de freinage du véhicule est modifié en fonction d'un moment d'entraînement estimé du véhicule en tenant compte d'un moment descensionnel de la pente, selon l'une des revendications 1 à 13, **caractérisé en ce que** lors du démarrage du véhicule, l'assistance au démarrage est déclenchée automatiquement en présence de conditions d'intervention, lesquelles sont déduites des états du véhicule, et que lors du démarrage, au moins la valeur limite supérieure de la bande de tolérance est remontée pendant une durée.

15. Procédé d'assistance au démarrage d'un véhicule dans une pente, selon lequel un moment de freinage du véhicule est modifié en fonction d'un moment d'entraînement estimé du véhicule en tenant compte d'un moment descensionnel de la pente, selon l'une des revendications 1 à 13, **caractérisé en ce qu'**un moment supplémentaire M_DOWN_CORR est déterminé en fonction de la valeur de la vitesse d'actionnement de la pédale d'accélérateur et du nombre d'actionnements de la pédale d'accélérateur pendant une durée prédéfinie, lequel est pris en compte lors de l'assistance au démarrage.

16. Procédé selon la revendication 15, **caractérisé en ce que** le moment supplémentaire M_DOWN_CORR et le moment descensionnel de la pente M_HANG sont additionnés.

17. Dispositif d'assistance au démarrage d'un véhicule dans une pente, avec lequel un moment de freinage du véhicule est modifié en fonction d'un moment d'entraînement estimé du véhicule en tenant compte d'un moment descensionnel de la pente, comprenant une unité de détermination pour déterminer une valeur de référence du moment d'entraînement du véhicule, une unité de comparaison pour comparer la valeur de référence avec le moment d'entraînement estimé du véhicule et un dispositif pour influencer le moment de freinage en fonction du résultat de la comparaison, **caractérisé en ce que** l'unité de détermination asservit la valeur de référence du moment d'entraînement du véhicule au moment d'entraînement du véhicule à l'intérieur d'une bande de tolérance jusqu'à ce qu'un signal de relâchement de la pédale de frein ne survienne.

18. Dispositif selon la revendication 17, **caractérisé en ce que** l'unité de détermination détermine la valeur de référence du moment d'entraînement du véhicule en fonction du moment d'entraînement du véhicule.

19. Dispositif selon la revendication 17 ou 18, **caractérisé en ce que** l'unité de détermination interprète la valeur de référence du moment d'entraînement du véhicule aussi en fonction d'autres grandeurs mesurées, grandeurs qui restituent le relâchement de la pédale de frein et/ou l'actionnement de la pédale d'accélérateur et/ou de grandeurs qui restituent l'état momentané du véhicule (immobilisation, démarrage, démarrage du moteur, etc.).

Moment

M_DRIVE

$\triangle$ = M_DIFF

t

t0

t1

M_DRIVE_REFVAL

## Fig. 1

10

15

Fahrer
betätigt
BBA ?

nein

ja

13

11

M_DRIVE_REFVAL
= MINIMUM
(M_DRIVE_REFVAL,
M_DRIVE)

M_DRIVE_REFVAL
= M_DRIVE

14

Limitierung von
M_DRIVE_REFVAL
auf [ -40 Nm, +20 Nm]

12

## Fig. 1a

Moment

M_DRIVE    14    G_OBEN

t    16

M_DRIVE_REFVAL    G_UNTEN

## Fig. 2

Moment

15    G_OBEN

M_DRIVE

t

$\Delta = \updownarrow$ M_DIFF $\geq$ M_ANFAHR

M_DRIVE_REFVAL

G_UNTEN

## Fig. 2a

**Fig. 3**

**Fig. 4**

**Fig. 4a**

# Fig. 5 (Startvorgang des Verbrennungsmotors)

Motormoment vom Steuergerät

Motordrehzahl/RPM

1000

Momente    t3

$\Delta$t1=1sec    $\Delta$t2=1sec-2sec

100 Nm

M_DRIVE

G_OBEN

20 Nm

-40 Nm

Startvorgang    M_DRIVE_REFVAL    G_UNTEN

16

M_DOWN_CORR

1 Ereignis

viele
Ereignisse

t

$\delta$ = Gaspedal[%]

t

# Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19630870 A

- WO 9920921 A